# EUROPÄISCHE PATENTANMELDUNG

(11) **EP 2 484 993 A2**
(43) Veröffentlichungstag der Anmeldung: **08.08.2012**
(21) Anmeldenummer: 12153737.7
(22) Anmeldetag: 02.02.2012
(51) Int. Cl.: F25B 35/04, F25B 39/02, F25B 17/08

(54) **Wärmepumpe**

(30) Priorität: 04.02.2011 DE 102011003664
(71) Anmelder: Behr GmbH & Co. KG, 70469 Stuttgart (DE)
(72) Erfinder: Burk, Roland, 70469 Stuttgart (DE); Neumeister, Dirk, 70374 Stuttgart (DE)
(74) Vertreter: Grauel, Andreas

(57) **Zusammenfassung**

Die Erfindung betrifft ein Hohlelement für eine Wärmepumpe, umfassend einen geschlossenen Hohlraum mit einem ersten Bereich (2), einem zweiten Bereich (3) und einer definierten Menge eines zwischen den Bereichen verlagerbaren Arbeitsmittels, wobei in dem ersten Bereich (2) ein Sorptionsmittel zur Adsorption und Desorption des Arbeitsmittels angeordnet ist, wobei in dem zweiten Bereich (3) ein insbesondere kapillarisches Aufnahmemittel zur Kondensation und Verdampfung des Arbeitsmittels angeordnet ist, und wobei zumindest einer der Bereiche (2, 3) mit einer Mehrzahl von Tauscherrohren in thermischem Austausch steht, die von zumindest einem wärmetragenden Fluid durchströmbar sind, wobei dem Hohlelement zumindest ein diskreter Schaltventil (6) zugeordnet ist, wobei das Fluid über das Schaltventil (6) auf die Mehrzahl von Tauscherrohren leitbar ist.

## Beschreibung

Die Erfindung betrifft eine Wärmepumpe nach dem Oberbegriff des Anspruchs 1.

WO 2010/112433 A2 beschreibt eine Wärmepumpe, die Stapel aus Hohlelementen aufweist, in denen jeweils eine Adsorptions-Desorptionszone und eine Kondensations-Verdampfungszone angeordnet ist. Die Hohlelemente sind jeweils mit einem Arbeitsmittel befüllt, das zwischen den beiden Bereichen verlagerbar ist. Eine thermische Beströmung der Hohlelemente mit einem wärmetragenden Fluid erfolgt dabei mittels integrierter Drehventile, die sämtliche Hohlelemente simultan ansteuern.

Es ist die Aufgabe der Erfindung, ein Hohlelement für eine Wärmepumpe anzugeben, das besonders flexibel einsetzbar ist.

Diese Aufgabe wird für ein eingangs genanntes Hohlelement erfindungsgemäß mit den kennzeichnenden Merkmalen des Anspruchs 1 gelöst.

Durch die Verwendung eines diskreten Schaltventils kann das Hohlelement je nach Anforderungen als ein Modul ausgebildet werden, das mit einer weitgehend beliebigen Anzahl weiterer Hohlelemente zu einer Wärmepumpe kombinierbar ist.

Unter einem Hohlelement gemäß dem Oberbegriff des Anspruchs 1 kann beispielhaft, aber nicht beschränkend eine der in WO 2010/112433 A2 beschriebenen Bauformen verstanden werden, zum Beispiel gemäß dem als "Warmeübertrager" bezeichneten Element der Fig. 4 bis Fig. 6 der WO 2010/112433 A2. Unter einem Aufnahmemittel im Sinne der Erfindung ist jedes insbesondere kapillarische Mittel zu verstehen, dass eine ausreichende Menge des kondensierten Arbeitsmittels in flüssiger Phase hatten kann. Zum Beispiel kann das Aufnahmemittel als kapillarische Struktur gemäß Fig. 19 der WO 2011/112433 A2 ausgebildet sein.

Allgemein vorteilhaft hat das Hohlelement jeweils zumindest zwei diskrete Schaltventile zur Ansteuerung einer Fluidbeströmung des ersten Bereichs und/oder des zweiten Bereichs. Somit können Einlass und Auslass jedes der Bereiche separat über die insgesamt wenigstens 4 Ventile gesteuert werden. Die Ventile können jeweils bevorzugt als 3/2-Wege Ventile (drei Anschlüsse, zwei Schaltstellungen) ausgebildet sein, oder auch als 3/3-Wege Ventile mit Absperrfunktion als dritter Stellung. Alternativ können auch 2/2-WegeVentile, z.B. einfache Sperrschieber, vorgesehen sein, die bei geeigneter Anzahl und Anordnung dieselben Schaltfunktionen erfüllen können.

Bei einer bevorzugten Detailgestaltung ist zur Vereinfachung der Bauform und/oder zur Einsparung von Kosten vorgesehen, dass ein Schaltventil des ersten Bereichs und ein Schaltventil des zweiten Bereichs über einen gemeinsamen Aktuator angetrieben sind.

Eine zweckmäßige Bauform eines diskreten Schaltventils für ein erfindungsgemäßes Hohlelement umfasst zum Beispiel einen drehbaren oder endlos rotierbarenVentilschieber, der von einem Stellantrieb betätigt wird. Durch zeitversetztes schrittweises Anfahren entsprechender Stellungen ist ein zyklischer Betrieb der Wärmepumpe auf einfache Weise ermöglicht. Durch geeignete Gestaltung des Ventils, zum Beispiel mittels einer Steuerkulisse in dem Ventilschieber, kann auch eine optimierte zeitliche Steuerungsabfolge von Fluidkreisen erfolgen, wobei der Schieber des Ventils einfach mit vonstanter Drehgeschwindigkeit bewegt wird.

Allgemein vorteilhaft ist für ein erfindungsgemäßes Hohlelement vorgesehen, dass der Hohlraum von der Mehrzahl von Tauscherohren durchgriffen wird, wobei insbesondere auf Seiten des Hohlraums Sammlerkästen der Tauscherrohre angeordnet sind. So lässt sich über ein einfaches Schaltventil eine Vielzahl von Tauscherrohren ansteuern.

Bei einer besonders bevorzugten Ausführungsform der Erfindung umfasst das Hohlelement ein Segment einer Fluidleitung zur Zuführung oder Abführung des Fluids, wobei die Fluidleitung zumindest teilweise durch sequentiell aufeinander folgende Segmente von mehreren, zu einem Stapel angeordneten Hohlelementen ausbildbar ist. Hierdurch wird der modulare Aufbau verbessert und eine Wärmepumpe mit beliebiger Anzahl von Hohlelementen kann einfach durch Stapelung der Elemente zusammengesetzt werden.

Allgemein vorteilhaft ist es vorgesehen, dass das Hohlelement jeweils mit einem Vorlauf und einen Rücklauf eines ersten Fluidkreises mit hoher Temperatur, eines zweiten Fluidkreises mit mittlerer Temperatur, und insbesondere eines dritten Fluidkreises mit niedriger Temperatur verschaltbar ist. Der Kreis mit hoher Temperatur dient dabei im Allgemeinen einem Antrieb der Wärmepumpe, indem durch Wärmeübertrag auf das Sorptionsmittel die Desorption des Arbeitsmittels erfolgt ("Aufladung" des Sorptionsmittels). Der Fluidkreis mit niedriger Temperatur kann insbesondere der Kühlung über einen externen Wärmeübertrager dienen, indem er durch Verdampfungskälte aus dem zweiten Bereich gekühlt wird.

In bevorzugter Weiterbildung ist eine Beströmung des ersten Bereichs zwischen dem ersten Fluidkreis und dem zweiten Fluidkreis mittels des Schaltventils umschaltbar. In besonders bevorzugter Detailgestaltung erfolgt dabei die austrittsseitige Umschaltung zwischen den Fluidkreisen verzögert, wobei während eines Verzögerungszeitraums die Tauscherrohre des ersten Bereichs eintrittsseitig mit einem der beiden Fluidkreise und austrittsseitig mit dem jeweils anderen der beiden Fluidkreise verbunden sind. Durch diese zeitlich definierte Zwischenstellung kann der Wirkungsgrad der Wärmepumpe weiter gesteigert werden. Um die temporären Bilanzunterschiede der Massenströme auch in einem solchen Zwischenschritt abzupuffern ist zweckmäßig ein Ausgleichsbehälter in zumindest einem der beiden Fluidkreise angeordnet, der eine ausreichende Kapazität besitzt, um zeitliche Mengenverlagerungen zwischen den Kreisläufen zuzulassen.

Bei einer vorteilhaften Weiterbildung sind die Tauscherrohre des ersten Bereichs abhängig von der Stellung des Schaltventils auf einer Seite mit dem Vorlauf des ersten Fluidkreises oder mit dem Rücklauf des zweiten Fluidkreises verbunden. Die Anordnung des Vorlaufes des einen Kreises und des Rücklaufes des anderen Kreises auf derselben Seite der Tauscherrohre bewirkt, dass die sich in den Hohlelementen einstellenden örtlichen Temperaturgradienten unabhängig von der Stellung des Schaltventils erhalten bleiben.

Zur weiteren Verbesserung der Effektivität der Wärmepumpe ist es vorgesehen, dass der Fluidstrom durch die Tauscherohre zumindest eines der beiden Bereiche, bevorzugt des zweiten Bereiches durch das Schaltventil absperrbar ist. Dies ermöglicht einen adiabaten Prozesswechsel der Module. Weitere Vorteile und Merkmale der Erfindung ergeben sich aus den nachfolgend beschriebenen Ausführungsbeispielen sowie aus den abhängigen Ansprüchen.

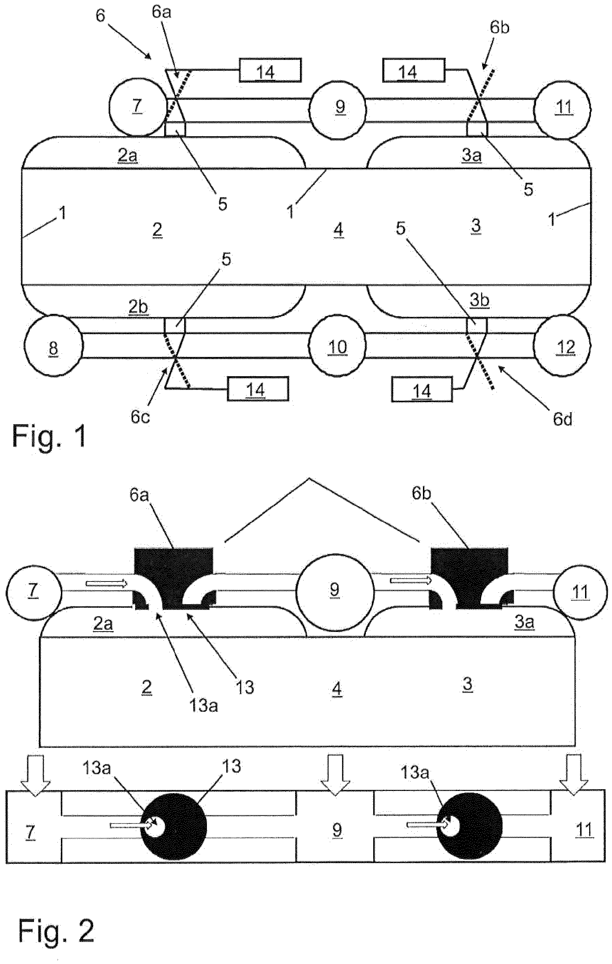

Nachfolgend werden mehrere bevorzugte Ausführungsbeispiele der Erfindung beschrieben und anhand der anliegenden Zeichnungen näher erläutert.
- Fig. 1: zeigt eine schematische Darstellung eines Hohlelements eines ersten Ausführungsbeispiels der Erfindung.
- Fig. 2: zeigt eine Darstellung der oberen Hälfte eines Hohlelements eines zweiten Ausführungsbeispiels der Erfindung.
- Fig. 3 bis Fig. 6: zeigen ein drittes Ausführungsbeispiel eines erfindungsgemäßen Hohlelements in vier unterschiedlichen Schaltstellungen.
- Fig. 7 bis Fig. 10: zeigen ein viertes Ausführungsbeispiel eines erfindungsgemäßen Hohlelements in vier verschiedenen Schaltstellungen.
- Fig. 11a bis Fig. 11d: zeigen ein weiteres Ausführungsbeispiel der Erfindung in vier Schaltstellungen.
- Fig. 12: zeigt ein Temperatur-Zeit-Diagramm eines Wärmeträgedluids eines zweiten Bereichs des Hohlelements aus Fig. 11.
- Fig. 13: zeigt ein Temperatur-Zeit-Diagramm einer abgewandelten Ventilschaltung.
- Fig. 14: zeigt eine schematische Darstellung einer sorptionsseitigen Verschaltung eines erfindungsgemäßen Hohlelements mit einer Zwischenstellung und einem Ausgleichsbehälter.
- Fig. 15a bis 15f: zeigen ein weiteres Ausführungsbeispiel der Erfindung für 6 Schaltstellungen zur Realisierung adiabater Phasen.
Das in Fig. 1 gezeigte Hohlelement umfasst ein äußeres Gehäuse 1, das einen länglichen Hohlraum hermetisch dicht einschließt, in dem ein Arbeitsmittel, vorliegend Methanol, angeordnet ist. Der Hohlraum hat einen ersten Bereich 2, in dem ein Sorptionsmittel, vorliegend Aktivkohle, angeordnet ist sowie einen zweiten Bereich 3, in dem ein kapillarisches Aufnahmemittel zur Aufnahme von kondensiertem Arbeitsmittel angeordnet ist (jeweils nicht dargestellt). Zwischen dem ersten Bereich (Adsorptionszone) 2 und dem zweiten Bereich (Verdampfungszone) 3 ist eine adiabatische Zone 4 vorgesehen, die von dem Arbeitsmittel durchströmt werden kann, aber im übrigen möglichst wenig Wärmeleitung zwischen dem ersten Bereich 2 und dem zweiten Bereich 3 zulässt.

Der Hohlraum bzw. das Gehäuse 1 wird in jedem der beiden Bereiche 2, 3 von einem Bündel aus mehreren Tauscherrohren, zum Beispiel Flachrohren, durchgriffen (nicht dargestellt). Die Tauscherohre jeden Bereichs 2, 3 münden eingangs- und ausgangsseitig jeweils in einen Sammler 2a, 2b, 3a, 3b, der seitlich auf das Gehäuse 1 des Hohlelements aufgesetzt ist. Die Sammler 2a, 2b, 3a, 3b haben jeweils eine Öffnung 5, die je nach Strömungsrichtung als Zufluss oder Abfluss eines wärmeführenden Fluids dient. Die Öffrungen 5 sind über jeweils eines von insgesamt vier diskreten Schaltventilen 6 (im Einzelnen 6a, 6b, 6c, 6d) mit einem Leitungssystem für das Wärmeträgerfluid verbunden. Die Schaltventile 6 haben jeweils einen Aktuator 14

Im Detail ist ein erster Fluidkreislauf (Hochtemperatur-Kreislauf) über einen Vorlauf 7 und einen Rücklauf 8 an die Öffnungen 5 der Sammler 2a, 2b des ersten Bereichs 2 angebunden. Ein zweiter Fluidkreislauf (Mitteltemperatur- oder Rückkühl-Kreistauf) ist über einen Vorlauf 9 und einen Rücklauf 10 sowohl an die Sammler des ersten Bereichs 2 als auch an die Sammler 3a, 3b des zweiten Bereichs 3 angebunden. Ein dritter Fluidkreislauf (Niedertemperatur- oder Kältekreislauf) ist über einen Vorlauf 11 und einen Rücklauf 12 an die Sammler 3a, 3b des zweiten Bereichs 3 angebunden.

Die vier diskreten Schaltventile 6 sind dabei als 3/2-Wege-Ventile ausgebildet, deren Schaltstellungen durch durchgezogene und gestrichelte Linien verdeutlicht sind. Je nach Schaltstellung des relevanten Ventils 6a ist der bezüglich der Tauscherohre des ersten Bereichs eintrittsseitige Sammler 2a entweder mit dem Vorlauf 7 oder dem Vorlauf 9 verbunden. Der Sammler 2b ist über das Ventil 6c entweder mit dem Rücklauf 8 oder dem Rücklauf 10 verbunden.

Der bezüglich der Tauscherrohre des zweiten Bereichs eintrittsseitige Sammler 3a ist über das Ventil 6b entweder mit dem Vorlauf 9 oder dem Vorlauf 11 verbunden. Der Sammler 3b ist über das Ventil 6d entweder mit dem Rücklauf 10 oder dem Rücklauf 12 verbunden.

Die Vorläufe und Rückläufe 7, 8, 9, 10, 11, 12 umfassen jeweils ein an dem Hohlelement angeordnetes Leitungssegment. Bei Stapelung einer wählbaren Anzahl von Hohlelementen zu einer Wärmepumpe (zum Beispiel 8 oder 12 Hohlelemente) werden die sequentiell aufeinander folgenden Segmente miteinander zu einem jeweiligen Abschnitt einer Fluidleitung zur Zuführung und/oder Abführung von Fluid verbunden (nicht dargestellt).

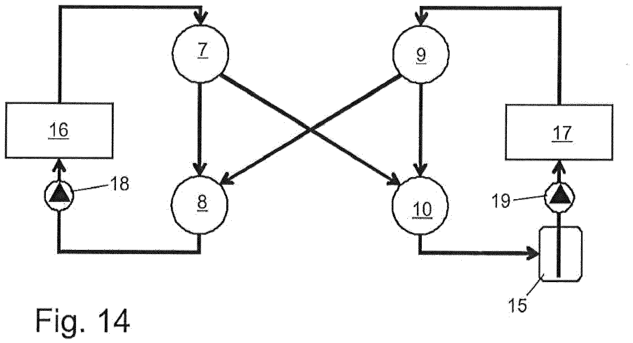

Die Funktion der Ventile ist nun wie folgt:
In einer ersten Stellung (durchgezogene Ventilstellung) strömt das von einer Hochtemperatur-Wärmequelle 16 (siehe Fig. 14), zum Beispiel ein Solarpanel o.ä., kommende heiße Fluid in den linken oberen Sammler 2a ein, durch die Sorptionszone 2 des Hohlelementes, durch den nachgeordneten Sammler 2b und dann über das linke untere Schaltventil 6c in den Rücklaufkanal 8, der zurück zur Hochtemperatur-Wärmequelle 16 führt und diesen durch eine Umwälzpumpe 18 angetriebenen Heiß-Kreislauf schließt. Auf diese Weise wird Wärme zur Desorption von Arbeitsmittel auf das in diesem Modus arbeitende Hohlelement übertragen.

Zeitgleich oder zeitlich verzögert stehen auch die Ventile 6b, 6d der Phasenwechselzone (in Fig. 1 rechts oben und unten) in der durchgezogenen Stellung, wodurch rückgekühltes Fluid einer Mitteltemperatur-Wärmesenke 17 (siehe Fig. 14, zum Beispiel Außenluft) in den oberen Sammler 3a des zweiten Bereichs bzw. der Phasenwechselzone 3 einströmt und über den zugeordneten unteren Sammler 3b in den Rücklaufkanal 10 und dann zum Rückkühler 17 zurückströmt, wodurch auch dieser von einer Pumpe 19 angetriebene Rückkühl-Kreislauf geschlossen ist. Dieser führt die frei werdende Kondensationswärme aus dem Hohlelement ab.

Dieser als Regenerationsprozess eines Hohlelementes bezeichnete Teilprozess wird nach einer definierten Zeit beendet, indem die oberen Ventile 6 und zeitgleich oder zeitlich versetzt die unteren Ventile 6 in die gestrichelt gezeichnete Position übergehen und dadurch den Nutzprozess einleiten. Dabei wird der Sorptionszone 2 nun das rückgekühlte Fluid des Rückkühl-Kreislaufs zugeführt. Die Phasenwechselzone 3 erhält nun das Fluid der Niedertemperatur-Wärmequelle (zum Beispiel zu kühlende Raumluft) über die Vorlauf- und Rücklaufleitungen 11, 12. Diese Leitungen bilden zusammen mit einer Umwälzpumpe, einem in Fig. 1 nicht gezeichneten Ausgleichgefäß und einen externen Wärmeübertrager den Kältekreislauf.

Bei dem Beispiel nach Fig. 2 ist im Unterschied zu Fig. 1 nur die obere Hälfte des Hohlelements mit den beiden oberen Ventilen 6a, 6c dargestellt. Die Ventile haben eine schematisch gezeigte Bauform, bei der eine reversibel oder endlos rotierbare Scheibe 13 als Ventilschieber fungiert. Der Ventilschieber 13 hat eine vorliegend lochförmige Durchbrechung (Kulisse), die bei Überdeckung mit einer entsprechenden Zuleitung im Ventilkörper das Fluid des jeweiligen Vorlaufs oder Rücklaufs durchlässt.

Ersichtlich ist je nach Stellung der Kulisse auch eine Absperrung beider Zugänge möglich, so dass die in Fig. 2 gezeigten Ventile als 3/3-Wege-Ventile angesehen werden können.

Die vollständige Absperrung der Zuleitungen zu einem Sammler kann dazu genutzt werden, einzelne Hohlelemente der Wärmepumpe zwischen dem Nutz- und Regenerationsprozess für eine gewisse Zeitdifferenz nicht zu durchströmen, wodurch ein adiabater Prozesswechsel ermöglicht wird.

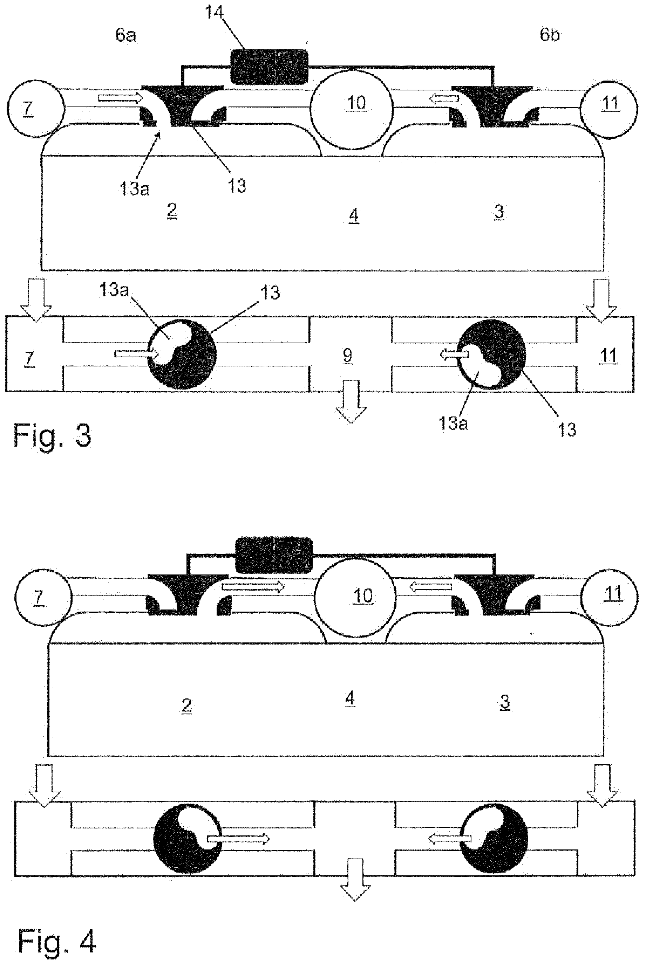

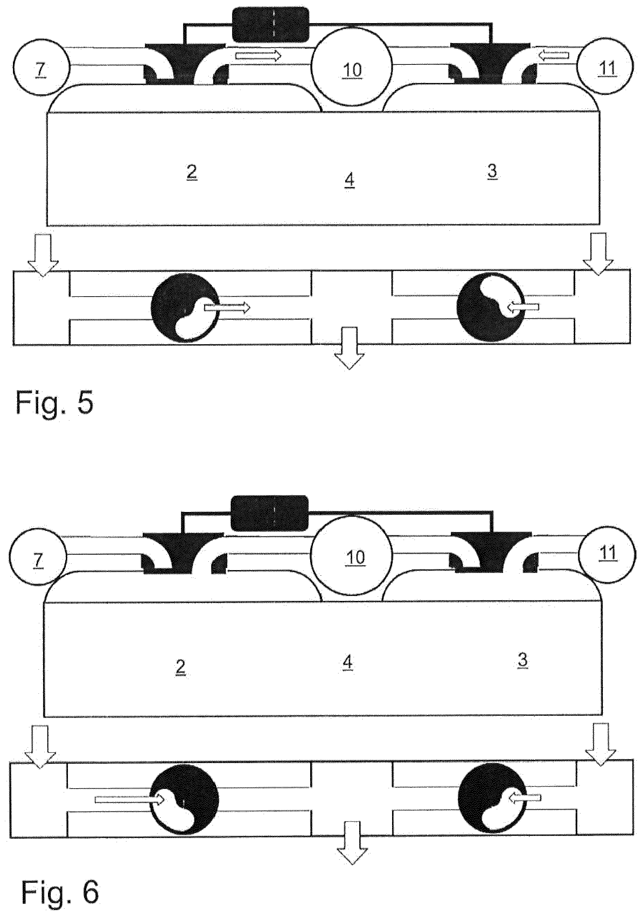

Bei dem Ausführungsbeispiel nach Fig. 3 bis Fig. 6 ist im Unterschied zum vorhergehenden Beispiel vorgesehen, dass der Rücklauf 10 des zweiten Fluidkreises auf der Seite des Vorlaufs 7 des ersten Fluidkreises angeordnet ist. Bei dieser Variante ist die Strömungsrichtung des von der Mitteltemperatur-Wärmesenke kommenden Fluids umgekehrt. Damit wird erreicht, dass die in den Hohlelementen sich ausbildenden örtlichen Temperaturgradienten unabhängig von der Ventilstellung aufrecht erhalten werden.

Weiterhin ist im Beispiel nach Fig. 3 bis Fig. 6 die Durchbrechung / Kulisse 13a im Ventilschieber 13 als Langloch ausgebildet. Durch diese Formgebung kann erreicht werden, dass Zwischenstellungen dazu genutzt werden, die Phasenwechselzone zeitversetzt umzuschalten (siehe aufeinander folgende Schaltstellungen in Fig. 3 bis Fig. 6).

Zudem ist im Beispiel nach Fig. 3 bis Fig. 6 vorgesehen, dass jeweils für die beiden Ventile 6 auf einer Seite nur ein gemeinsamer Aktuator, vorliegend ein Drehantrieb 14 zum reversiblen oder endlosen Anfahren der Schaltpositionen, vorgesehen ist.

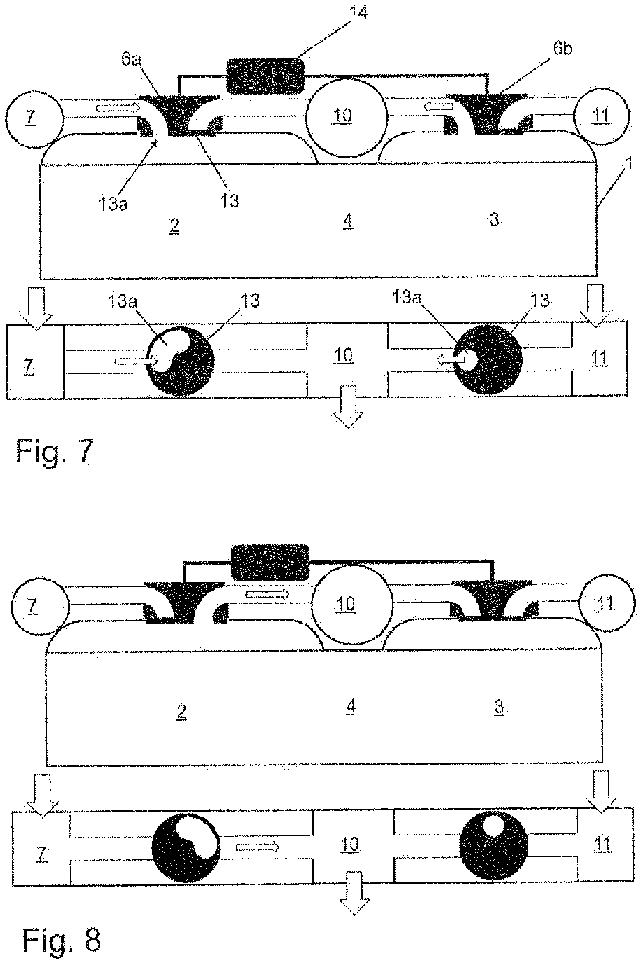

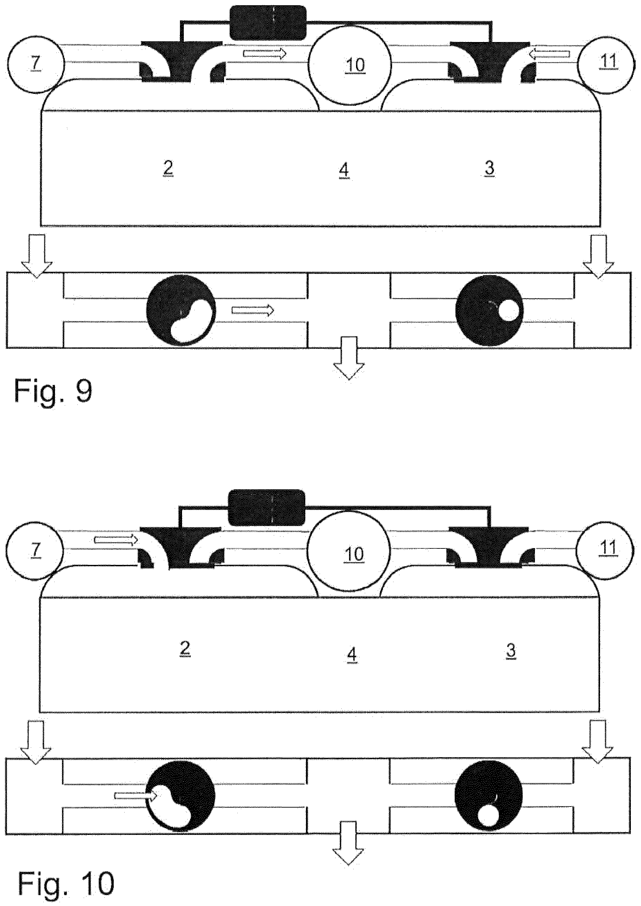

Das Ausführungsbeispiel nach Fig. 7 bis Fig. 10 unterscheidet sich von dem vorhergehenden Beispiel dadurch, dass die Schaltventile 6a der Sorptionszone 2 eine andere Kulisse (hier: Langloch) aufweisen als die Schaltventile 6b der Verdampfungszone 3. Beim Umschalten der Sorptionszone wird die Phasenwechselzone zur Realisierung eines adiabaten Prozesswechsels für eine definierte Zeitdifferenz zunächst komplett geschlossen, bevor dann auch dort die Umschaltung auf den komplementären Kreislauf erfolgt. Die Figuren 7 bis 10 zeigen 4 aufeinander folgende Ventilstellungen.

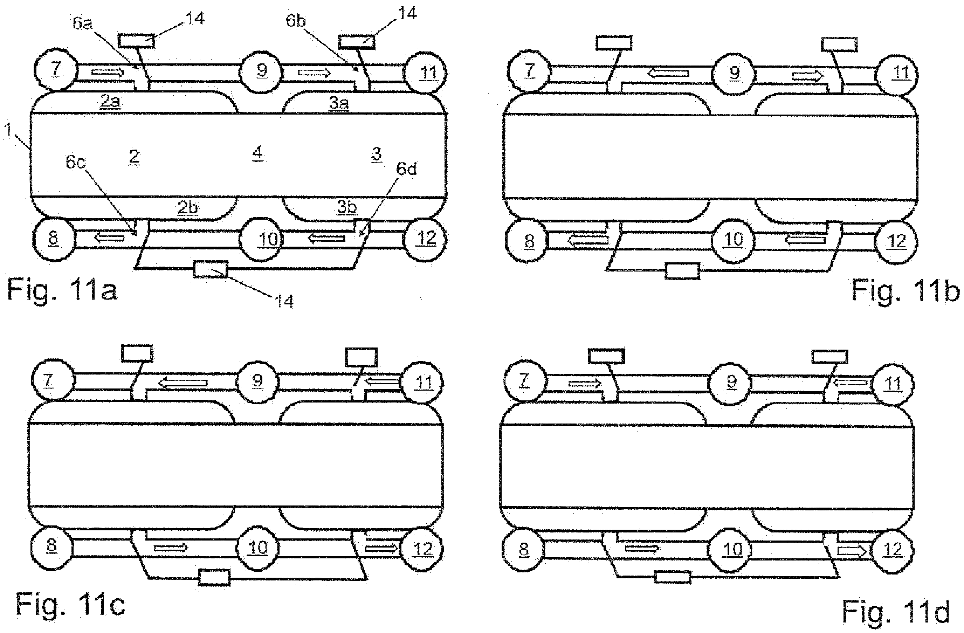

Bei dem Ausführungsbeispiel nach den Fig. 11a bis 11d liegen Vorläufe 7, 9 und Rückläufe 8, 10 des ersten und zweiten Fluidkreises wie im Beispiel nach Fig. 1 auf derselben Seite. Die Ventile 6a, 6b der Eingangsseiten sind jeweils separat schaltbar. Die Ventile 6c, 6d der Ausgangsseiten werden gemeinsam geschaltet, so dass sie aus Kostengründen einen gemeinsamen Aktuator 14 aufweisen.

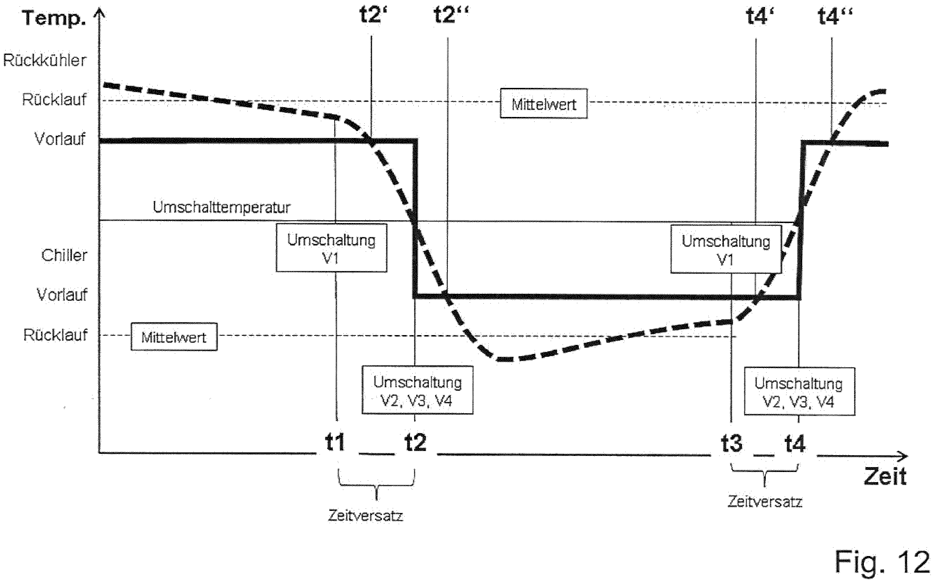

Damit wird die Möglichkeit eröffnet, durch alleinige Umschaltung des sorptionsseitigen Vorlaufventils 6a die vor jedem Prozesswechsel erforderliche Umkehrung des Temperaturgradienten (Temperaturwechsel) zwischen dem sorptionsseitigen Fluid und dem Sorptionsmittel zu vollziehen und dabei die rücklaufseitigen Ventile 6c, 6d besonders kostengünstig als gemeinsam angetriebene und zeitgleich geschaltete 3/2-Wege-Ventile auszuführen. Vorzugsweise wird die Umschaltzeit der Ventile 6b, 6c und 6d nach einer Zeitverzögerung zu 6a geschaltet, die in Abhängigkeit der Fluid-Austrittstemperaturen der Phasenwechselzone entsprechend Fig. 12 definiert werden kann.

Bei diesem Ausführungsbeispiel sind die Ventile abstrakt gezeichnet, um anzudeuten, der Ventilkörper selbst durchaus unterschiedlich ausgeführt sein kann.

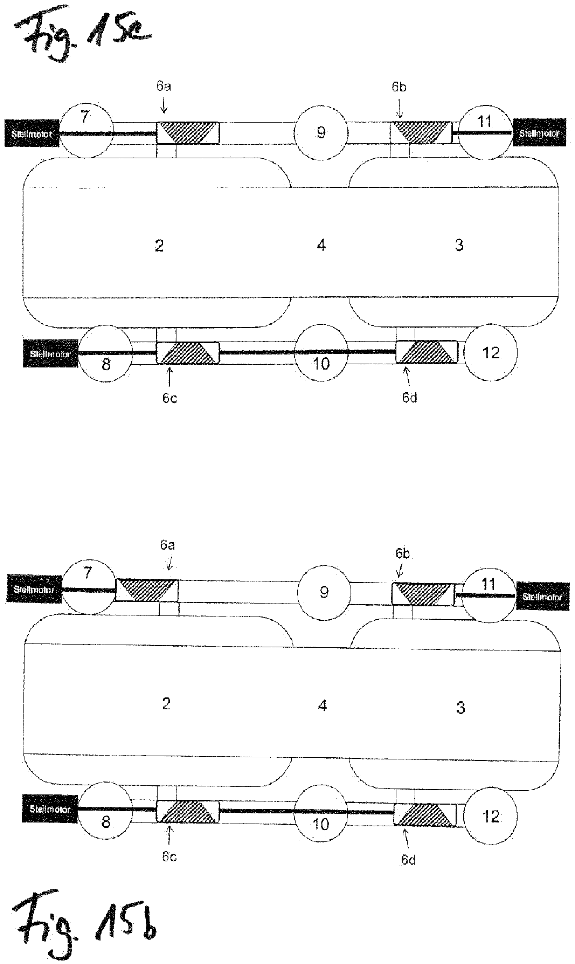

In den Fig. 15a bis 15d sind Schaltstellungen einer besonders bevorzugten Ausführungsform eines Ventilsatzes auf Basis mechanisch über Schubstangen verschiebbarer Kolben dargestellt. Als Aktuatoren kommen neben Stellmotoren alle gängigen Antriebstechnologien, insbesondere Getriebemotoren, Schrittmotoren, Elektromagneten, pneumatische oder hydraulische Antriebe in Frage. Bevorzugt sind jedoch Stellantriebe, die die einzelnen Schaltpositionen der Ventile stromlos halten können. Im Unterschied zu den Figuren 11a bis 11f ist das Ventil 6b in diesem Falle als 3/3-Wegeventil ausgeführt, um eine adiabate Phase des zweiten Bereiches 3 (Phasenwechselzone) zu ermöglichen.

Die Fig. 12 zeigt beispielhafte Temperaturverläufe für die Ein- und Austrittstemperaturen des Wärmeträgerfluids der Phasenwechselzone über einen vollständigen Zyklus einer Ventilanordnung nach Fig. 11 sowie die mittleren Rücklauftemperaturen, die sich als Mittelwert vieler übereinander gestapelter Module in den jeweiligen Rücklaufkanälen einstellt.

Zum Zeitpunkt t = 0 Sekunden befinden sich die Ventile 6a bis 6d in der in Fig. 11a dargestellten Position. Dabei strömt heißes Fluid zum Zwecke der Desorption des Arbeitsmittels in die Sorptionszone (Bereich 2) des Hohlelementes ein und gibt dabei Wärme an das Sorptionsmittel ab, wodurch Arbeitsmittel desorbiert wird. Dieses strömt zur Phasenwechselzone (Bereich 3) des Hohlelementes und kondensiert dort unter Wärmeabgabe. Dabei wird das diese Zone beströmende rückgekühltes Fluid von einer Vorlauftemperatur (durchgezogene Linie) auf eine höhere Rücklauftemperatur erwärmt (dick gestrichelte Linie). Dieser Prozess schreitet bis zum Zeitpunkt t1 fort, bei dem durch Umschaltung des Ventils 6a entsprechend Fig. 11b nun rückgekühltes Fluid in die Sorptionszone 2 einströmt und den Prozesswechsel einleitet. Hierbei wird zunächst ein Temperaturwechsel vorgenommen, bei dem die Temperaturdifferenz zwischen Wärmeträger und Sorptionsmittel umgekehrt wird. Während dieser Zeitspanne kommt die Desorption und folglich auch die Kondensation an dem Aufnahmemittel zum Stillstand (Zeitpunkt t2') und geht in eine Adsorptionsphase über, wodurch der Systemdruck und die Sättigungstemperatur stark abfallen (Zeitpunkt t2). Zu einem noch späteren Zeitpunkt t2" wird die Vorlauftemperatur des Kältekreislaufes unterschritten.

Vorschlagsgemäß werden nach einer Zeitverzögerung, die durch die Zeitpunkte t2' und t2" eingegrenzt wird, und besonders bevorzugt nach einer durch Zeitpunkt t2 definierten Verzögerung die Ventile 6b, 6c und 6d entsprechend Fig. 11c in den eigentlichen Nutzprozess von Adsorption und Verdampfung umgeschaltet.

Zum Zeitpunkt t3 wird durch abermalige Umschaltung des Ventils 6a in die Stellung nach Fig. 11d die Adsorptionsphase beendet und die nächste Desorptionsphase eingeleitet, indem rückgekühltes Fluid in die Sorptionszone eintrsömt. Hierbei wird zunächst ein abermaliger Temperaturwechsel vorgenommen bei dem die Temperaturdifferenz zwischen Wärmeträger und Adsorbens umgekehrt wird. Während dieser Zeitspanne kommt die Adsorption und folglich auch die Verdampfung zum Stillstand (Zeitpunkt t4') und geht in eine Desorptionsphase über, wodurch der Systemdruck und die Sättigungstemperatur stark ansteigen (Zeitpunkt t4). Zu einem noch späteren Zeitpunkt t4" wird die Vorlauftemperatur des Rückkühlkreislaufes überschritten.

Vorschlagsgemäß werden wiederum nach einer Zeitverzögerung, die durch die Zeitpunkte t4' und t4" eingegrenzt wird, und besonders bevorzugt nach einer durch Zeitpunkt t4 definierten Verzögerung, die Ventile 6b, 6c und 6d entsprechend Fig. 11a in den stationären Regenerationsprozess, bestehend aus Desorption und Kondensation, umgeschaltet, wodurch der beschriebene Zyklus abgeschlossen ist.

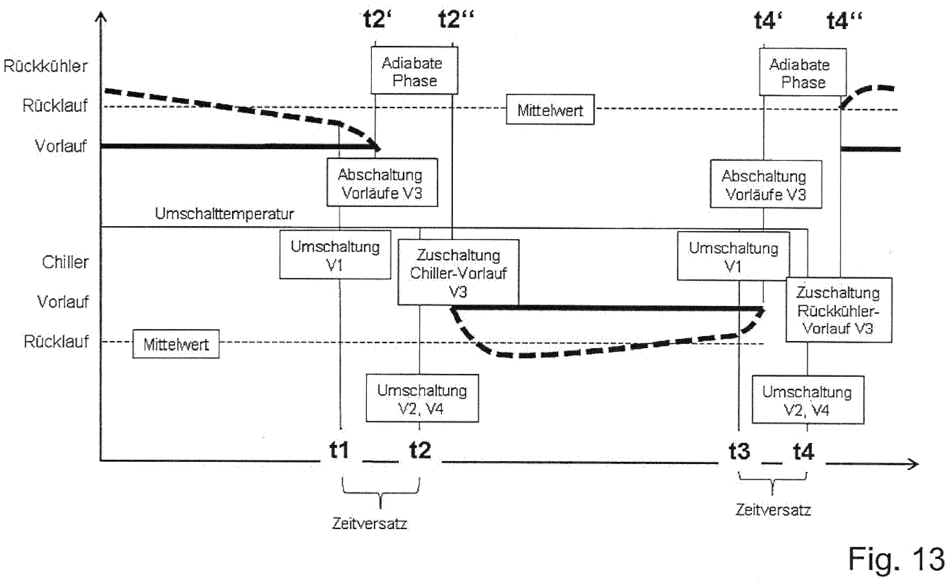

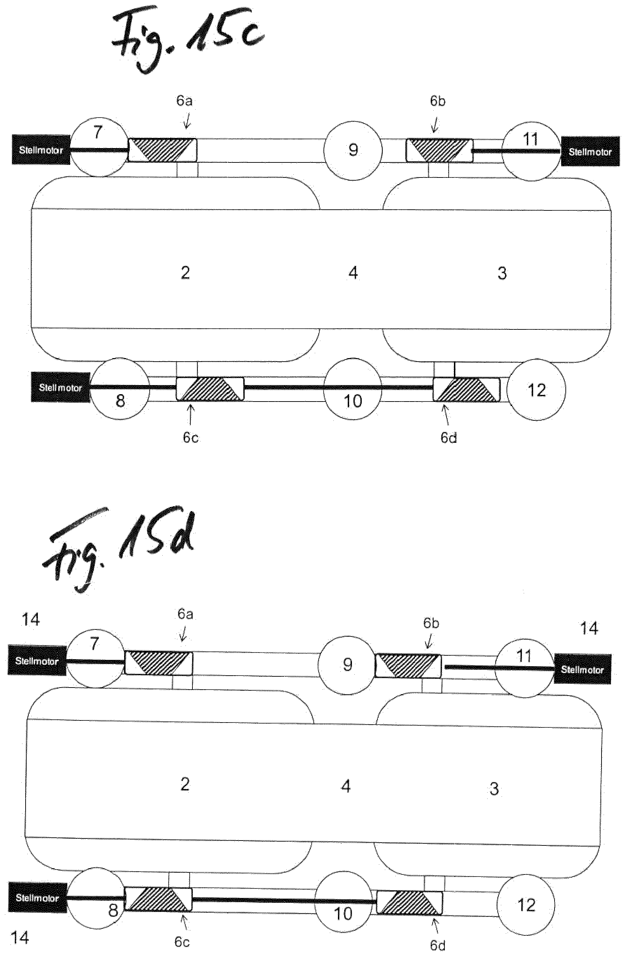

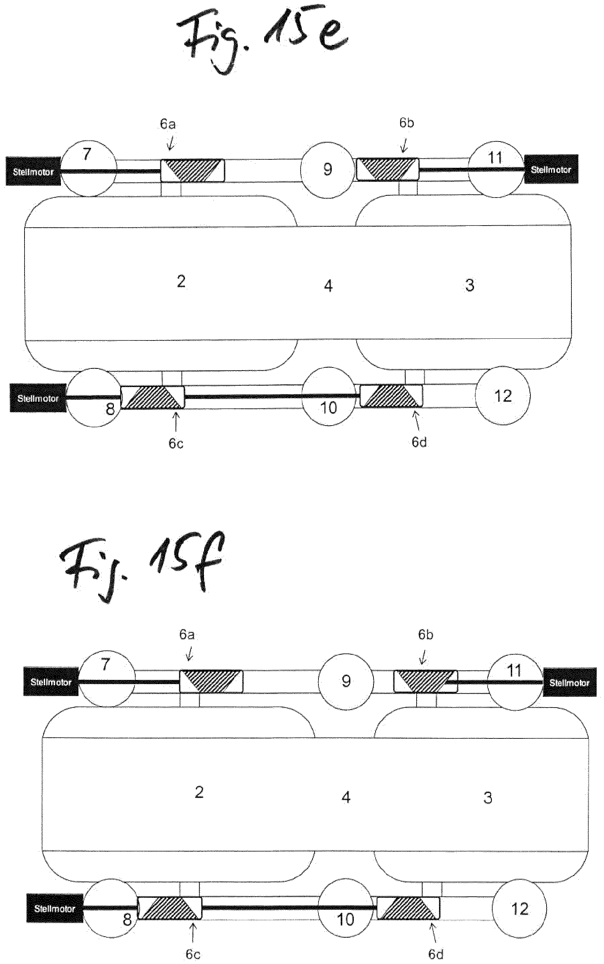

Eine weitere, besonders bevorzugte Zeitsteuerung der Ventile 6 ist in Fig. 13 dargestellt. Diese Fluidsteuerung erfordert entsprechend der Ventilanordung der Fig. 15 ein Ventil 6c mit der Möglichkeit, beide Zuströmungen zum Zwecke einer adiabaten Phase gleichzeitig abzusperren (zum Beispiel 3/3-WegeVentil, Drehventil gemäß Fig. 7). Auch dieses Ausführungsbeispiel ermöglicht die zeitgleiche Umschaltung der beiden besonders einfach ausgeführten Rücklaufventile 6c und 6d als 3/2-Wege-Ventile mit einem gemeinsamen Stellantrieb.

Um die Massenbilanzen zwischen beiden sorptionszonenseitigen Kreisiäufen aufrecht zu erhalten, sind die Zeitdifferenzen t2-t1 und t4-t3 vorzugsweise gleich. Alternativ kann eine unterschiedliche Zeitdifferenz durch Unterschiedliche Massenströme kompensiert werden.

Ein Massenausgleich zwischen beiden Teilkreisläufen wird auf einfache Weise dadurch erzielt, dass die beiden Kreisläufe ein gemeinsames Ausgleichsgefäß 15 besitzen. Dadurch stellen sich die kreuzenden Massenströme über die sich einstellenden Druckniveaus so ein, dass die Massenbilanzen ausgeglichen sind. Eine schematische Darstellung der sorptionsseitigen Fluidkreise mit möglichen Verschaltungen und Ausgleichsbehälter 15, äußeren Wärmeübertragern 16, 17 und Umwälzpumpen 18, 19 ist in Fig. 14 gezeigt.

Für den Falle sehr weniger Module, kann es vorteilhaft sein, den zweiten Kreislauf mit einem Druckpuffer auszustatten, der zeitlich fluktuierende Massenströme zwischen den Teilkreisläufen in dem Sinne abzupuffern, dass ein temporärer Zustrom des zweiten Kreislaufs in den ersten Kreislauf und umgekehrt von den eingesetzten Ausgleichbehältern aufgenommen werden können. Durch die Druckpufferung wird dann lediglich bewirkt, das im zeitlichen Mittel diese Massenströme ausgeglichen sind.

In einer weiteren Ausführungsform werden beide Vorlaufventile 6a und 6b zu Zeitpunkt t1 umgeschaltet, die Rückläufe durch die Ventile 6b und 6d bevorzugt innerhalb des Zeitintervalls zwischen t2' und t2 bzw. t4' und t4", besonders bevorzugt zum Zeitpunkt t2 bzw. t4, umgeschaltet. In weiterer Verfeinerung können die als 3/3-Wegeventile ausgeführten, abströmseitigen Ventile den Durchfluss zwischen den Zeitpunkten t2' und t2" bzw. zwischen t4' und t4" stoppen, um einen adiabaten Prozesswechsel zu realisieren.

Bei allen Ausführungsformen wird vorgeschlagen, dass über eine elektronische Steuereinrichtung die Ventile jedes Hohlelements einer Wärmepumpe mit einem der vorgeschlagenen Schaltprogramme mit einem Phasenversatz angesteuert werden, der sich nach der Regel ergibt: Phasenversatz = Zykluszeit / Zahl der Module.

Das modulare Konzept der segmentierten Fluidleitungen lässt sich auch mit einer anderen Zahl von Leitungssegmenten umsetzen. Es kann z. B. vorteilhaft sein, zwei getrennte Rückkühlkreisläufe vorzusehen, wobei ein Vorlauf-Rücklauf-Paar der Abfuhr der Adsorptionswärme und ein zweites Paar der Abfuhr der Kondensationswärme dient. Dadurch können unterschiedliche Wärmeträgerfluide in der Sorptionszone und Phasenwechselzone eingesetzt werden, insbesondere Luft zur Übertragung der Kondensations- und Verdampfungswärme. Beide Kreisläufe der Phasenwechsetzone sind hierbei vorzugsweise durch offene Luftkreisläufe ersetzt, durch die gekühlte oder beheizte Luft je nach Kühl- oder Heizbedarf unterschiedlichen Lufträume (z.B. Gebäudetuft und Außenluft) entnommen und zugeführt wird.

Da die zur Luftsteuerung benötigten Ventile große Querschnitte benötigen, werden für diese Ausführungsvariante entsprechend modifizierte Ventil- oder Klappenkonzepte erforderlich. Besonders bevorzugt wird dabei ein Ventilkonzept, wie es in den Figuren 20 bis 24 der Schrift WO 2009 103325 A2 beschrieben ist. Dabei werden sämtliche vier zur Übertragung der Kondensations- und Verdampfungswärmen benötigten Fluidleitungen durch nur noch zwei tuftführende Hohlzylinder ersetzt. Diese sind zur Luftsteuerung von jeweils durchgehenden stufigen Einsätzen ausgefüllt, die die Hohlzylinder in zwei helixfömig verdrehte Halbräume unterteilen und darin koordiniert mit den anderen Ventilelementen schrittweise rotieren, wie dies in der WO 2009 103325 A2 ausgeführt ist.

Es versteht sich, dass die einzelnen Merkmale der verschiedenen Ausführungsbeispiele je nach Anforderungen sinnvoll miteinander kombiniert werden können.

## Patentansprüche

1. Hohlelement für eine Wärmepumpe, umfassend einen geschlossenen Hohlraum mit einem ersten Bereich (2), einem zweiten Bereich (3) und einer definierten Menge eines zwischen den Bereichen verlagerbaren Arbeitsmittels,
wobei in dem ersten Bereich (2) ein Sorptionsmittel zur Adsorption und Desorption des Arbeitsmittels angeordnet ist,
wobei in dem zweiten Bereich (3) ein insbesondere kapillarisches Aufnahmemittel zur Kondensation und Verdampfung des Arbeitsmittels angeordnet ist, und
wobei zumindest einer der Bereiche (2, 3) mit einer Mehrzahl von Tauscherrohren in thermischem Austausch steht, die von zumindest einem wärmetragenden Fluid durchströmbar sind,
**dadurch gekennzeichnet,**
**dass** dem Hohlelement zumindest ein diskretes Schaltventil (6) zugeordnet ist, wobei das Fluid über das Schaltventil (6) auf die Mehrzahl von Tauscherrohren leitbar ist.

2. Hohlelement nach Anspruch 1, **dadurch gekennzeichnet, dass** das Hohlelement jeweils zumindest zwei diskrete Schaltventile (6a, 6c) zur Ansteuerung einer Fluidbeströmung des ersten Bereichs (2) und/oder des zweiten Bereichs (3) aufweist.

3. Hohlelement nach Anspruch 1 oder 2, **dadurch gekennzeichnet, dass** ein Schaltventil (6a) des ersten Bereichs und ein Schaltventil (6b) des zweiten Bereichs über einen gemeinsamen Aktuator (14) angetrieben sind.

4. Hohlelement nach einem der vorhergehenden Ansprüche, **dadurch gekennzeichnet, dass** das Schaltventil (6) einen reversibel oder endlos rotierbaren Ventilschieber (13) umfasst .

5. Hohlelement nach einem der vorhergehenden Ansprüche, **dadurch gekennzeichnet, dass** das Schaltventil (6) einen axial verschiebbaren Kolben aufweist.

6. Hohlelement nach einem der vorhergehenden Ansprüche, **dadurch gekennzeichnet, dass** der Hohlraum von der Mehrzahl von Tauscherohren durchgriffen wird, wobei insbesondere auf Seiten des Hohlraums Sammler (2a, 2b, 3a, 3b) der Tauscherrohre angeordnet sind.

7. Hohlelement nach einem der vorhergehenden Ansprüche, **dadurch gekennzeichnet**, das das Hohlelement ein Segment einer Fluidleitung (7, 8, 9, 10, 11, 12) zur Zuführung oder Abführung des Fluids umfasst, wobei die Fluidleitung zumindest teilweise durch sequentiell aufeinander folgende Segmente von mehreren, zu einem Stapel angeordneten Hohlelementen ausbildbar ist.

8. Hohlelement nach einem der vorhergehenden Ansprüche, **dadurch gekennzeichnet, dass** das Hohlelement jeweils mit einem Vorlauf (7, 9, 11) und einen Rücklauf (8, 10, 12) eines ersten Fluidkreises mit hoher Temperatur, eines zweiten Fluidkreises mit mittlerer Temperatur, und insbesondere eines dritten Fluidkreises mit niedriger Temperatur verschaltbar ist.

9. Hohlelement nach Anspruch 8, **dadurch gekennzeichnet, dass** eine Beströmung des ersten Bereichs (2) zwischen dem ersten Fluidkreis und dem zweiten Fluidkreis mittels des Schaltventils (6) umschaltbar ist.

10. Hohlelement nach Anspruch 9, **dadurch gekennzeichnet**, das die Umschaltung zwischen den Fluidkreisen verzögert erfolgt, wobei während eines Verzögerungszeitraums die Tauscherrohre des ersten Bereichs (2) eintrittsseitig mit einem der beiden Fluidkreise und austrittsseitig mit dem jeweils anderen der beiden Fluidkreise verbunden sind.

11. Hohlelement nach Anspruch 10, **dadurch gekennzeichnet, dass** ein Ausgleichsbehälter (15) in zumindest einem der beiden Fluidkreise angeordnet ist.

12. Hohlelement nach einem der Ansprüche 8 bis 11, **dadurch gekennzeichnet, dass** die Tauscherrohre des ersten Bereichs (2) abhängig von der Stellung des Schaltventils (6) auf einer Seite mit dem Vorlauf (7) des ersten Fluidkreises oder mit dem Rücklauf (10) des zweiten Fluidkreises verbunden sind.

13. Hohlelement nach einem der vorhergehenden Ansprüche, **dadurch gekennzeichnet, dass** der Fluidstrom durch die Tauscherohre zumindest eines der beiden Bereiche (2, 3) durch das Schaltventil (6) absperrbar ist.
